# EUROPEAN PATENT APPLICATION

(11) **EP 4 715 610 A1**
(43) Date of publication of application: **25.03.2026**
(21) Application number: 24845886.1
(22) Date of filing: 12.07.2024
(51) Int. Cl.: G06F 12/0802, H04L 67/568, H04L 67/1097, H04L 43/067, G06F 3/06

(54) **ELECTRONIC DEVICE INCLUDING CACHE MEMORY AND OPERATING METHOD OF ELECTRONIC DEVICE**

(30) Priority: 21.07.2023 KR 20230095487
(71) Applicant: Samsung Electronics Co., Ltd., Suwon-si, Gyeonggi-do 16677 (KR)
(72) Inventor: PARK, Sungsik, Suwon-si, Gyeonggi-do 16677 (KR)
(74) Representative: Walaski, Jan Filip
(86) International application number: PCT/KR2024/010049
(87) International publication number: WO 2025/023583

(57) **Abstract**

Provided are an electronic device and an operating method of the electronic device, the electronic device including a memory storing at least one instruction, a cache memory storing cache data, at least one processor configured to execute the at least one instruction stored in the memory, and a communication interface, wherein the at least one processor is configured to execute the at least one instruction to receive a request to fetch network data provided by a server, compare expected network response performance with expected cache response performance, based on a result of the comparing, obtain the network data by requesting the network data via the communication interface or obtain the cache data by requesting the cache data from the cache memory, and process the obtained network data or the obtained cache data.

## Description

### Technical Field

The disclosure relates to an electronic device and an operating method of the electronic device. More particularly, the disclosure relates to an electronic device including a cache memory and an operating method of the electronic device.

### Background Art

With advancements in electronic devices and network technology, operations involving running a web application or web browser on an electronic device, requesting data from a server, receiving data from the server, and executing the web application or web browser are commonly performed.

In this case, because the operation of receiving data from the server over a network is generally slower than the operation of requesting data and receiving data within the electronic device itself, data that is repeatedly used in the operation of the web application or web browser may be stored in a cache memory in the electronic device, and the electronic device may receive data necessary for the execution of the web application or web browser from the cache memory.

### Disclosure of Invention

### Solution to Problem

According to an embodiment of the disclosure, an electronic device is provided. The electronic device may include a memory storing at least one instruction. The electronic device may include a cache memory storing cache data. The electronic device may include at least one processor configured to execute the at least one instruction stored in the memory. The electronic device may include a communication interface. The at least one processor may be configured to execute the at least one instruction to receive a request to fetch network data provided by a server. The at least one processor may be configured to execute the at least one instruction to compare expected network response performance indicating the time expected for fetching the network data from the server with expected cache response performance indicating the time expected for retrieving cache data corresponding to the network data from the cache memory. The at least one processor may be configured to execute the at least one instruction to, based on a result of the comparing, obtain the network data by requesting the network data from the server via the communication interface or obtain the cache data by requesting the cache data from the cache memory. The at least one processor may be configured to execute the at least one instruction to process the obtained network data or the obtained cache data.

According to an embodiment of the disclosure, an operating method of an electronic device is provided. The operating method of the electronic device may include receiving a request to fetch network data provided by a server. The operating method of the electronic device may include comparing expected network response performance indicating the time expected for fetching the network data from the server with expected cache response performance indicating the time expected for retrieving cache data corresponding to the network data from a cache memory. The operating method of the electronic device may include, based on a result of the comparing, obtaining the network data by requesting the network data from the server via the communication interface, or obtaining the cache data by requesting the cache data from the cache memory. The operating method of the electronic device may include processing the obtained network data or the obtained cache data.

According to an embodiment of the disclosure, there may be provided a computer-readable recording medium having recorded thereon a program for performing, on a computer, at least one of the operating methods according to the embodiments of the disclosure.

### Brief Description of Drawings

The disclosure will be more apparent from the following description taken in conjunction with the accompanying drawings, wherein reference numerals denote structural elements.
FIG. 1 is a diagram illustrating an operation of an electronic device according to an embodiment of the disclosure.
FIG. 2 is a diagram illustrating an operation of an electronic device according to an embodiment of the disclosure.
FIG. 3 is a block diagram of a configuration of an electronic device according to an embodiment of the disclosure.
FIG. 4 is a flowchart illustrating operations of an electronic device, according to an embodiment of the disclosure.
FIG. 5 is a flowchart illustrating an operation of comparing expected network response performance with expected cache response performance, according to an embodiment of the disclosure.
FIG. 6 is a flowchart illustrating an operation of determining whether cache data is valid, according to an embodiment of the disclosure.
FIG. 7 is a flowchart illustrating an operation of determining whether cache data is valid after comparing expected network response performance with expected cache response performance, according to an embodiment of the disclosure.
FIG. 8 is a flowchart illustrating an operation of determining whether a request to fetch network data is needed, according to an embodiment of the disclosure.
FIG. 9 is a flowchart illustrating an operation of executing an application based on obtained network data or obtained cache data, according to an embodiment of the disclosure.
FIG. 10 is a flowchart illustrating operations of an electronic device based on a relationship between an occurrence time of a network data request and a preset reference time, according to an embodiment of the disclosure.
FIG. 11 is a flowchart illustrating an operation in which an electronic device requests network data from a server and cache data from a cache memory, according to an embodiment of the disclosure.
FIG. 12A is a diagram illustrating an electronic device executing an application, according to an embodiment of the disclosure.
FIG. 12B is a diagram illustrating an electronic device executing an application in which a plurality of operations are performed, according to an embodiment of the disclosure.
FIG. 13 is a diagram illustrating an electronic device executing a plurality of applications, according to an embodiment of the disclosure.

### Mode for the Invention

Terms used in the disclosure will now be briefly described and then an embodiment of the disclosure will be described in detail.

The terms used herein may be general terms currently widely used in the art based on functions described in the disclosure, but may be changed according to an intention of a technician engaged in the art, precedent cases, advent of new technologies, etc. Furthermore, specific terms may be arbitrarily selected by the applicant, and in this case, the meaning of the selected terms will be described in detail in the detailed description of the disclosure. Thus, the terms used herein should be defined not by simple appellations thereof but based on the meaning of the terms together with the overall description of the disclosure.

Singular expressions used herein are intended to include plural expressions as well unless the context clearly indicates otherwise. All the terms used herein, which include technical or scientific terms, may have the same meaning that is generally understood by one of ordinary skill in the art.

Unless the context clearly indicates otherwise, the singular forms "a, "an," and "the" are to be understood to include a plurality of referents. Thus, for example, reference to "a surface constituting" may also include reference to one or more of such surfaces.

As used herein, when a part "includes" or "comprises" an element, unless there is a particular description contrary thereto, it is understood that the part may further include other elements, not excluding the other elements. In addition, terms such as "portion", "module", etc., described herein refer to a unit for processing at least one function or operation and may be implemented as hardware or software, or a combination of hardware and software.

The expression "configured to (or set to)" used herein may be used interchangeably, according to context, with, for example, the expression "suitable for," "having the capacity to," "designed to," "adapted to," "made to," or "capable of". The term "configured to (or set to)" may not necessarily mean only "specifically designed to" in terms of hardware. Instead, the expression "a system configured to" may mean, in some contexts, the system being "capable of", together with other devices or components. For example, the expression "a processor configured to (or set to) perform A, B, and C" may mean a dedicated processor (e.g., an embedded processor) for performing the corresponding operations, or a general-purpose processor (e.g., a central processing unit (CPU) or an application processor (AP)) capable of performing the corresponding operations by executing one or more software programs stored in a memory.

Furthermore, it should be understood that when a component is referred to herein as being "connected" or "coupled" to another component, the component may be directly connected or coupled to the other component, but may also be connected or coupled to the other component via another intervening component therebetween unless there is a particular description contrary thereto.

It should be understood that blocks in each flowchart and combinations of flowcharts may be performed by one or more computer programs including computer-executable instructions. The one or more computer programs may be all stored in a single memory, or may be partitioned and stored in a number of different memories.

All functions or operations described herein may be processed by a single processor or a combination of processors. The processor or combination of processors is circuitry that performs processing, and may include circuitry such as an application processor (AP), a communication processor (CP), a graphics processing unit (GPU), a neural processing unit (NPU), a microprocessor unit (MPU), a system-on-chip (SoC), an integrated chip (IC), and the like.

An embodiment of the disclosure will be described more fully hereinafter with reference to the accompanying drawings so that the embodiment may be easily implemented by a person of ordinary skill in the art. However, an embodiment of the disclosure may be implemented in different forms and should not be construed as being limited to embodiment of the disclosure set forth herein. In addition, parts not related to descriptions are omitted to clearly explain an embodiment of the disclosure in the drawings, and like reference numerals denote like elements throughout.

Hereinafter, embodiments of the disclosure are described in detail with reference to the accompanying drawings.

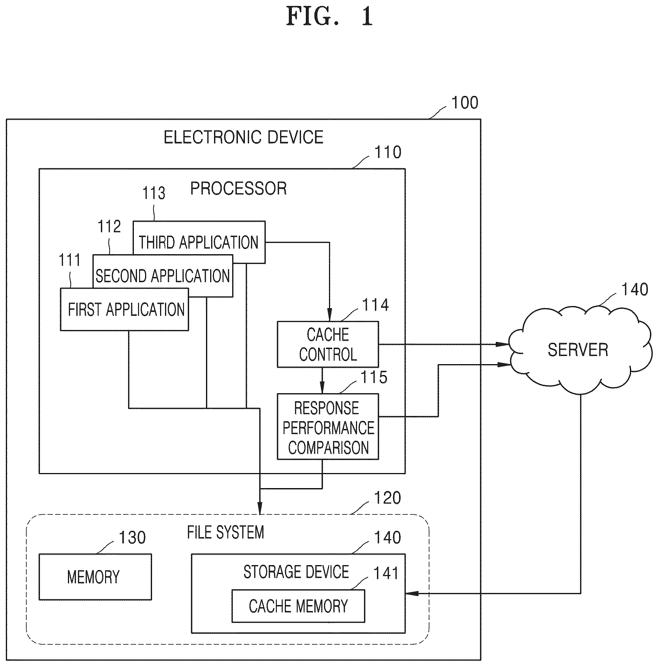

FIG. 1 is a diagram illustrating an operation of an electronic device according to an embodiment of the disclosure.

Referring to FIG. 1, in an embodiment of the disclosure, an electronic device 100 may be an electronic device for executing an application. In an embodiment of the disclosure, the electronic device 100 may be an electronic device having various shapes, such as a television, a mobile phone, a smartphone, a tablet personal computer (PC), a wearable device, a healthcare device, an Internet of things (IOT) device, a PC, a laptop computer, a server, a media player, or an automotive device such as a navigation system.

In an embodiment of the disclosure, an application executed by the electronic device 100 may include images, document (text), video, audio, a web page, a web application, a mobile application, or the like.

In an embodiment of the disclosure, the electronic device 100 may include at least one processor 110, a memory 130, and a storage device 140. However, the components of the electronic device 100 shown in FIG. 1 are shown to illustrate operations of the electronic device 100, and all of the components shown in FIG. 1 are not essential components. The electronic device 100 may be implemented with more components than those shown in FIG. 1, or may be implemented with fewer components than the shown components.

In an embodiment of the disclosure, a file system 120 may refer to a method of organizing and managing data, materials, or files included in the electronic device 100. In an embodiment of the disclosure, the memory 130 and the storage device 140 may be organized and managed via the file system 120. In an embodiment of the disclosure, at least one instruction stored in the memory 130 and data stored in the storage device 140 may be organized and managed via the file system 120. By using the file system 120, the at least one processor 110 may execute at least one instruction stored in the memory 130, or request data from the storage device 140 and read the stored data. Hereinafter, for convenience of description, executing, by the at least one processor 110, at least one instruction stored in the memory 130 via the file system 120 may be referred to as executing, by the at least one processor 110, the at least one instruction stored in the memory 130. In addition, the at least one processor 110 requesting data from the storage device 140 via the file system 120 and reading necessary data from the storage device 140 may be referred to as the at least one processor 110 requesting data from the storage device 140 and reading the necessary data from the storage device 140.

In an embodiment of the disclosure, the at least one processor 110 may execute at least one instruction stored in the memory 130 to execute at least one application. The at least one processor 110 may execute at least one instruction stored in the memory 130 to request the storage device 140 for data necessary for executing the at least one application and read the necessary data from the storage device 140. In an embodiment of the disclosure, the storage device 140 may include a non-volatile storage device that stores data regardless of the status of power supply.

In an embodiment of the disclosure, when network data provided from the server 150 is needed to execute some of the at least one application, the at least one processor 110 may execute the at least one instruction stored in the memory 130 to request the network data from the server 150 and obtain the network data from the server 150. The server 150 performs data communication with the electronic device 100 via a communication interface, and may include a web server, an application server, a database management system (DBMS), or the like.

In an embodiment of the disclosure, network data may be data provided from the server 150 in response to a request from the at least one processor 110. The network data may consist of a header and body. In an embodiment of the disclosure, the header may include metadata information about the network data. The header may include a type and size of the network data, request time and response time, a validity period of the network data, cache control information for the network data, etc. In an embodiment of the disclosure, the body may include information about the network data needed to execute the application.

In an embodiment of the disclosure, the storage device 140 may include a cache memory 141 in which cache data is stored. The at least one processor 110 may store, based on a header of the received network data, the network data as cache data in the cache memory 141. In an embodiment of the disclosure, the network data may be stored as cache data based on cache control information included in the header of the network data.

In an embodiment of the disclosure, when network data provided from the server 150 is needed to execute some of the at least one application, the at least one processor 110 may execute at least one instruction stored in the memory 130 to determine whether cache data stored in the cache memory 141 is valid. In an embodiment of the disclosure, the at least one processor 110 may determine whether the cache data is valid based on information such as a request time, a response time, and a validity period of the network data, which are included in a header of the cache data. In an embodiment of the disclosure, the header of the cache data may include a validity period of the cache data.

In an embodiment of the disclosure, when determining that the cache data stored in the cache memory 141 is valid, the at least one processor 110 may execute at least one instruction stored in the memory 130 to request the cache data corresponding to the network data and read and obtain the cache data from the cache memory 141. In an embodiment of the disclosure, when determining that the cache data stored in the cache memory 141 is invalid, the at least one processor 110 may execute at least one instruction stored in the memory 130 to request the network data from the server 150 via a communication interface and obtain the network data from the server 150.

In an embodiment of the disclosure, the at least one processor 110 may execute a plurality of applications. At this time, each of the plurality of applications may be an application containing a different type of content.

In an embodiment of the disclosure, the at least one processor 110 may request data for execution of each of the plurality of applications via the file system 120 and obtain the requested data.

In an embodiment of the disclosure, when the plurality of applications include an application that needs to receive network data from the server 150 for execution, the at least one processor 110 may request the network data from the server 150 in order to execute the application. In this case, when cache data corresponding to the network data is stored in the cache memory 141, the at least one processor 110 may request the cache data from the cache memory 141 via the file system 120 rather than the server 150.

However, when the at least one processor 110 executes the plurality of applications, repeating the operation of requesting data via the file system 120 and obtaining the requested data may cause a bottleneck in input/output of the file system 120. In this case, requesting network data from the server 150 and obtaining the network data may be more time efficient than requesting cache data from the cache memory 141 via the file system 120 and obtaining the cache data because the former operation takes less time than the latter operation.

Embodiments of the disclosure are presented for describing an electronic device and operating method thereof for obtaining data necessary for execution of an application in an efficient manner, based on a result of comparing, even when cache data exists in the cache memory 141, expected cache response performance indicating the time expected for retrieving the cache data from the cache memory 141 with expected network response performance indicating the time expected for fetching (or retrieving) network data from the server 160.

In an embodiment of the disclosure, when the plurality of applications are executed on the electronic device 100 (e.g., when the electronic device 100 is booted or when the plurality of applications 111, 112, and 113 are executed together within a short period of time), the at least one processor 110 may request the storage device 140 for data necessary for executing each of the plurality of applications 111, 112, and 113. In an embodiment of the disclosure, FIG. 1 illustrates an example where the electronic device 100 executes a first application 111, a second application 112, and a third application 113. However, the disclosure is not limited thereto, and the electronic device 100 may execute two applications or four or more applications.

In an embodiment of the disclosure, the at least one processor 110 may request pieces of data for executing the first application 111 from the storage device 140. The at least one processor 110 may request pieces of data for executing the second application 112 from the storage device 140. The at least one processor 110 may request data stored in the storage device 140 from the storage device 140 among pieces of data for executing the third application 113.

In an embodiment of the disclosure, the third application 113 may be an application that requires network data to be provided from the server 150 in order to be executed. The at least one processor 110 may determine, via cache control 114, whether cache data corresponding to the network data, which is stored in the cache memory 141, is valid. The at least one processor 110 may request the cache data from the storage device 140 when determining that the cache data is valid. The at least one processor 110 may request the network data from the server 150 via the communication interface when determining that the cache data is invalid.

In an embodiment of the disclosure, a signal transmitted by the at least one processor 110 to request data from the storage device 140 may be accumulated in a queue of the file system 120. In an embodiment of the disclosure, the queue is a priority queue-type data structure, and the file system 120 may process data requests from the at least one processor 110 that are accumulated in the queue and provide corresponding data to the at least one processor 110. The file system 120 may process not only queued signals requesting data from the storage device 140 but also a signal requesting at least one instruction from the memory 130 to thereby provide the corresponding data or the at least one instruction to the at least one processor 110. In this case, the processing speed of the file system 120 is limited, so when the number of data request signals and signals requesting at least one instruction, which are accumulated in the queue, increases, the speed at which pieces of data corresponding to data requests further back in the processing order are provided may also slow down. Such a bottleneck in the input/output of the file system 120 may slow down execution of applications on the electronic device 100.

However, the disclosure is not limited thereto, and data request signals transmitted by the at least one processor 110 to request data from the storage device 140 may be accumulated in a queue of the storage device 140, thereby causing a bottleneck in input/output of the storage device 140 that reduces the speed at which the storage device 140 provides data corresponding to the data request signals.

In this case, because the processing speed of the storage device 140 is limited, when the number of data request signals accumulated in the queue increases, the speed at which pieces of data corresponding to data requests back in the processing order are provided may also slow down. Such an input/output bottleneck may slow down execution of applications on the electronic device 100.

Inn an embodiment of the disclosure, the at least one processor 110 may perform an operation 115 of comparing expected network response performance, which indicates performance calculated based on fetching network data from the server 150 according to requesting the network data from the server 150, with expected cache response performance, which indicates performance calculated based on retrieving cache data from the cache memory 141 included in the storage device 140 according to requesting the cache data from the cache memory 141.

In an embodiment of the disclosure, based on determining that the expected network response performance is higher than the expected cache response performance, the at least one processor 110 may request the network data from the server 150 via the communication interface, and obtain the network data from the server 150 to execute and display the third application 113. By doing so, the network data may be obtained via the server 150 with high response performance even when the cache data is stored in the cache memory 141, thereby increasing the operating speed of the third application 113.

In an embodiment of the disclosure, based on determining that the expected network response performance is equal to the expected cache response performance, the at least one processor 110 may request the network data from the server 150 via the communication interface, and obtain the network data from the server 150 to execute the third application 113. By doing so, the number of data request signals accumulated in the queue of the storage device 140 including the cache memory 141 may be reduced, thereby preventing the execution of the first application 111 and the second application 112 from being slowed down due to the input/output bottleneck.

In an embodiment of the disclosure, based on determining that the expected cache response performance is higher than the expected network response performance, the at least one processor 110 may request the cache data from the cache memory 141 and obtain the cache data from the cache memory 141 to execute the third application 113. By doing so, the cache data may be obtained from the cache memory 141 faster than when the network data is obtained from the server 150, thereby increasing the execution speed of the third application 113.

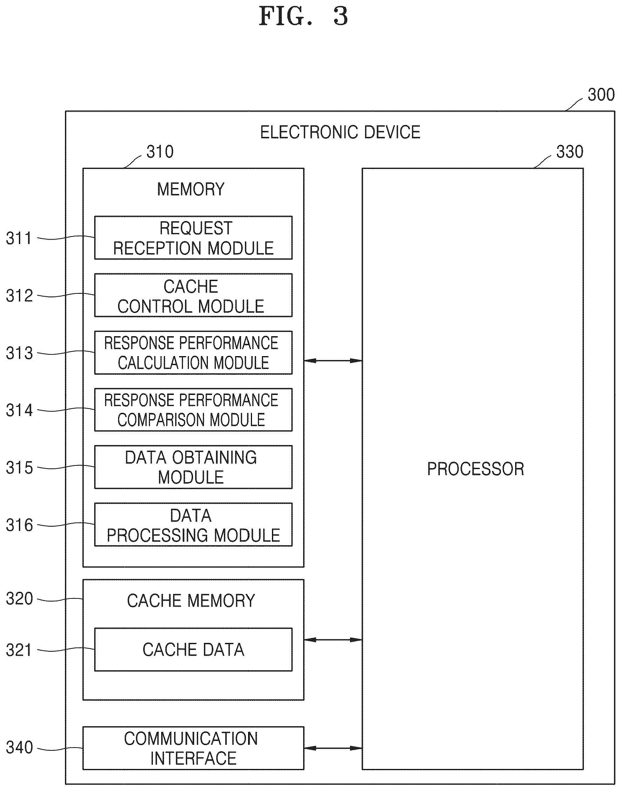

Calculating and comparing expected network response performance and expected cache response performance is described below with reference to FIGS. 3 to 5.

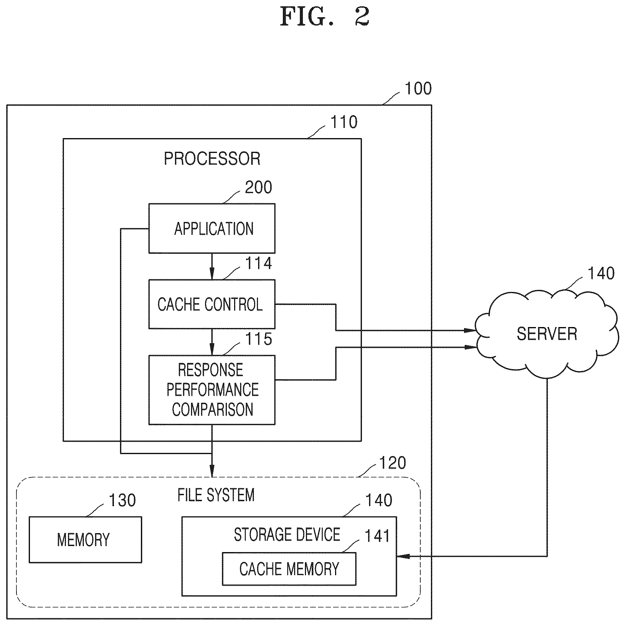

FIG. 2 is a diagram illustrating an operation of an electronic device according to an embodiment of the disclosure. Hereinafter, the same reference numerals will be assigned to the same components as those shown in FIG. 1, and descriptions already provided are omitted.

In an embodiment of the disclosure, FIG. 2 illustrates a case where a single application 200 is executed on the electronic device 100. In an embodiment of the disclosure, even when the application 200 is executed on the electronic device 100, when a plurality of operations are performed within the application 200, the number of data request signals accumulated in a queue of the storage device 140 may increase, thereby slowing down the speed at which pieces of data corresponding to data requests back in the processing order are provided. Accordingly, some of the operations of the application 200 being executed on the electronic device 100 may be performed slowly. However, the disclosure is not limited thereto, and even when a plurality of applications are executed on the electronic device 100 and a plurality of operations are performed in at least one of the applications, some of the operations of the at least one application may be performed slowly.

In an embodiment of the disclosure, the at least one processor 110 may execute at least one instruction included in the memory 130 to determine whether network data that is to be provided from the server 150 is included among pieces of data to execute the application 200. In an embodiment of the disclosure, at least one operation of the application 200 may all need network data.

In an embodiment of the disclosure, the at least one processor 110 may determine via cache control 114 whether cache data included in the cache memory 141 is valid, and when determining that the cache data is valid, perform the operation 115 of comparing expected network response performance with expected cache response performance.

In an embodiment of the disclosure, based on determining that the expected network response performance is higher than the expected cache response performance, the at least one processor 110 may request network data from the server 150 via the communication interface, and obtain the network data from the server 150 to execute the application 200. In this way, the network data may be obtained via the server 150 with high response performance even when the cache data is stored in the cache memory 141, thereby increasing the speed of an operation of the application 200 that requires the network data among a plurality of operations of the application 200.

In an embodiment of the disclosure, based on determining that the expected network response performance is equal to the expected cache response performance, the at least one processor 110 may request network data from the server 150 via the communication interface, and obtain the network data from the server 150 to execute the application 200. By doing so, the number of data request signals accumulated in the queue of the storage device 140 including the cache memory 141 may be reduced, thereby preventing the plurality of operations of the application 200 from being slowed down due to an input/output bottleneck.

In an embodiment of the disclosure, based on determining that the expected cache response performance is higher than the expected network response performance, the at least one processor 110 may request cache data from the cache memory 141 via the file system 120, and obtain the cache data from the cache memory 141 to execute the application 200. By doing so, the cache data may be obtained from the cache memory 141 faster than when the network data is obtained from the server 150, thereby increasing execution speed of an operation of the application 200 that requires the network data among the plurality of operations of the application 200.

FIG. 3 is a block diagram of a configuration of an electronic device according to an embodiment of the disclosure.

Referring to FIG. 3, in an embodiment of the disclosure, an electronic device 300 may include a memory 310, a cache memory 320, at least one processor 330, and a communication interface 340. However, all of the components shown in FIG. 3 are not essential components. The electronic device 300 may be implemented with more or fewer components than those shown in FIG. 3. In an embodiment of the disclosure, the electronic device 300 may include a storage device including the cache memory 320. In an embodiment of the disclosure, the memory 310, the cache memory 320, the at least one processor 330, and the communication interface 340 may be electrically and/or physically connected to each other.

In an embodiment of the disclosure, the memory 310 may store instructions, data structures, and program code that are readable by the at least one processor 330. In an embodiment of the disclosure, the memory 310 may be configured as one or more memories. In embodiments of the disclosure, operations performed by the at least one processor 330 may be implemented by executing instructions or code of a program stored in the memory 310.

In an embodiment of the disclosure, the memory 310 may include at least one of a flash memory-type memory, a hard disk-type memory, a multimedia card micro-type memory, a card-type memory (e.g., a Secure Digital (SD) or eXtreme Digital (XD) memory, etc.), random access memory (RAM), static RAM (SRAM), read-only memory (ROM), electrically erasable programmable ROM (EEPROM), PROM, a mask ROM, flash ROM, hard disk drive (HDD), or solid-state drive (SSD). The memory 310 may store instructions or program codes for performing functions or operations of the electronic device 300. Instructions, algorithms, data structures, program code, and application programs stored in the memory 310 may be implemented in programming or scripting languages such as C, C++, Java, assembler, etc.

In an embodiment of the disclosure, the memory 300 may store a request reception module 311, a cache control module 312, a response performance calculation module 313, a response performance comparison module 314, a data obtaining module 315, and a data processing module 316. However, all of the modules shown in FIG. 3 are not essential modules. The memory 310 may store more or fewer modules than those shown in FIG. 3.

In an embodiment of the disclosure, a 'module' included in the memory 310 may refer to a unit for processing functions or operations performed by the at least one processor 330. The 'module' included in the memory 310 may be implemented as software such as instructions, algorithms, data structures, or program code.

In an embodiment of the disclosure, the request reception module 311 may be composed of instructions or program code related to an operation or function of receiving a request to fetch network data provided from the server (150 of FIG. 1). In an embodiment of the disclosure, network data provided from the server 150 may be needed to execute an application on the electronic device 100. In an embodiment of the disclosure, network data provided by the server 150 may be included among at least one piece of data required for instructions, data structures, or program code to execute the application. In an embodiment of the disclosure, instructions, data structures, or program code for executing an application may obtain network data from the server 150 and use the obtained network data to execute the application. In an embodiment of the disclosure, the at least one processor 330 may execute the instructions or program code of the request reception module 311 to receive a request to fetch network data provided by the server 150, which is needed in the process of executing instructions, data structures, or program code to execute an application.

In an embodiment of the disclosure, the cache control module 312 may be composed of instructions or program code related to an operation or function of determining whether cache data 321 stored in the cache memory 320 is valid. The cache control module 312 may be composed of instructions or program code related to an operation or function of determining, prior to requesting network data from the server 150, whether the cache data 321 corresponding to the network data is stored in the cache memory 320 and whether the cache data 321 stored in the cache memory 320 is valid. In an embodiment of the disclosure, the cache control module 312 may be composed of instructions or program code related to an operation or function of, based on a request to fetch network data provided from the server 150, retrieving a header of at least one cache data 321 stored in the cache memory 320 and determining whether the cache data 321 is valid by determining whether the cache data 321 corresponding to the requested network data is stored in the cache memory 320, whether a validity period of the cache data 321 corresponding to the requested network data has expired, etc.

In an embodiment of the disclosure, the at least one processor 330 may execute the instructions or program code of the cache control module 312 to determine whether the cache data 321 stored in the cache memory 320 is valid.

In an embodiment of the disclosure, the response performance calculation module 313 may be composed of instructions or program code related to an operation or function of calculating expected network response performance, which represents performance calculated based on fetching network data from the server 150 according to requesting the network data from the server 150, with expected cache response performance, which represents performance calculated based on retrieving the cache data 321 from the cache memory 320 according to requesting the cache data 321 from the cache memory 320. In an embodiment of the disclosure, the expected network response performance may indicate the expected time to obtain the network data from the server 150. The expected cache response performance may indicate the expected time to obtain the cache data 321 from the cache memory 320.

In an embodiment of the disclosure, the response performance calculation module 313 may be composed of instructions or program code related to an operation or function of calculating expected network response performance based on a first elapsed time from a time when network data is requested from the server 150 to a time when the network data is obtained from the server 150. The calculated expected network response performance may indicate the time that it will take to request network data from the server 150 and then obtain the network data from the server 150 . In an embodiment of the disclosure, the shorter the time required to obtain the network data, the better the expected network response performance.

In an embodiment of the disclosure, the response performance calculation module 313 may be composed of instructions or program code related to an operation or function of calculating expected cache response performance based on a second elapsed time from a time when the cache data 321 is requested from the cache memory 320 to a time when the cache data 321 is obtained from the cache memory 320. The calculated expected cache response performance may indicate the time that it will take to request the cache data 321 from the cache memory 320 and then obtain the cache data 321 from the cache memory 320. In an embodiment of the disclosure, the shorter the time required to obtain the cache data 321, the better the expected cache response performance.

In an embodiment of the disclosure, the at least one processor 330 may execute the instructions or program code of the response performance calculation module 313 to calculate the expected network response performance and the expected cache response performance.

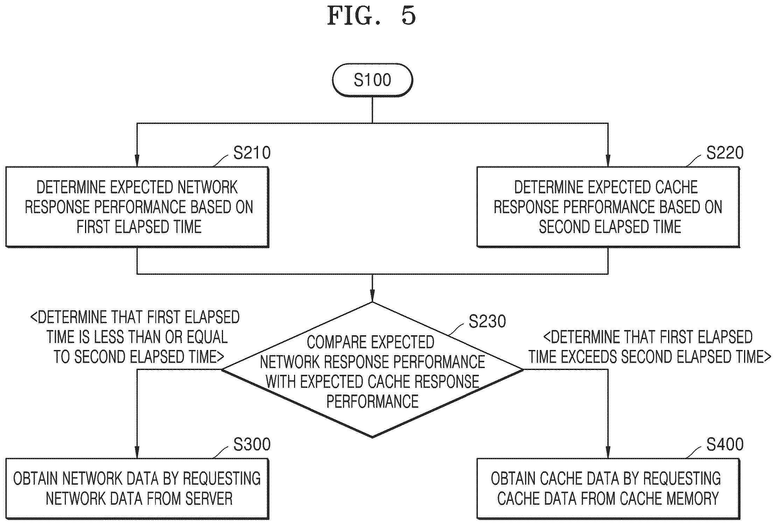

Hereinafter, the operation of calculating the first elapsed time and the second elapsed time is described below with reference to FIG. 5.

In an embodiment of the disclosure, the response performance comparison module 314 may be composed of instructions or program code related to an operation or function of comparing the calculated expected network response performance with the calculated expected cache response performance. In an embodiment of the disclosure, the response performance comparison module 314 may be composed of instructions or program code related to an operation or function of, based on the expected network response performance being calculated based on the first elapsed time and the expected cache response performance being calculated based on the second elapsed time, comparing the expected network response performance with the expected cache response performance via comparison between the first elapsed time and the second elapsed time. In an embodiment of the disclosure, the at least one processor 330 may execute the instructions or program code of the response performance comparison module 314 to compare the expected network response performance with the expected cache response performance.

In an embodiment of the disclosure, the at least one processor 330 may execute the instructions or program code of the response performance comparison module 314 to determine that the expected network response performance is higher than the expected cache response performance when determining that the first elapsed time is less than or equal to the second elapsed time. In an embodiment of the disclosure, the at least one processor 330 may execute the instructions or program code of the response performance comparison module 314 to determine that the expected cache response performance is higher than the expected network response performance when determining that the first elapsed time exceeds the second elapsed time.

FIG. 3 shows that the response performance calculation module 313 and the response performance comparison module 314 are separate modules, but the disclosure is not limited thereto. Instructions or program code related to the operation or function of calculating response performance and the operation or function of comparing response performance may constitute a single module.

In an embodiment of the disclosure, the data obtaining module 315 may be composed of instructions or program code related to an operation or function of obtaining the network data from the server 150 by requesting the network data from the server 150 via the communication interface 340, or obtaining the cache data 321 from the cache memory 320 by requesting the cache data 321 from the cache memory 320, according to a result of the comparison between the expected network response performance and the expected cache response performance. In an embodiment of the disclosure, the at least one processor 330 may execute the instructions or program code of the data obtaining module 315 to obtain the network data from the server 150 by requesting the network data from the server 150 via the communication interface 340, or obtain the cache data 321 from the cache memory 320 by requesting the cache data 321 from the cache memory 320, according to a result of the comparison between the expected network response performance and the expected cache response performance.

In an embodiment of the disclosure, based on determining that the expected network response performance is higher than the expected cache response performance, the at least one processor 330 may execute the instructions or program code of the data obtaining module 315 to obtain the network data from the server 150 by requesting the network data from the server 150 via the communication interface 340. Based on determining that the expected cache response performance is higher than the expected network response performance, the at least one processor 330 may execute the instructions or program code of the data obtaining module 315 to obtain the cache data 321 from the cache memory 320 by requesting the cache data 321 from the cache memory 320.

In an embodiment of the disclosure, the data processing module 316 may be composed of instructions or program code related to an operation or function of processing the obtained network data or the obtained cache data. In an embodiment of the disclosure, the data processing module 316 may be composed of instructions or program code related to an operation or function of performing preprocessing, such as transformation, feature extraction, sampling, filtering, sorting, cleaning, etc., on the obtained network data or obtained cache data. In an embodiment of the disclosure, the data processing module 316 may be composed of instructions or program code related to an operation or function of executing an application by executing instructions, data structures, or program code for executing the application by using the obtained network data or obtained cache data.

In an embodiment of the disclosure, the at least one processor 330 may execute the instructions or program code of the data processing module 316 to preprocess the obtained network data or obtained cache data. In an embodiment of the disclosure, the at least one processor 330 may execute the instructions or program code of the data processing module 316 to execute an application by using the obtained network data or obtained cache data.

In an embodiment of the disclosure, the cache memory 320 may store the network data obtained from the server (150 of FIG. 1) via the communication interface 340 as the cache data 321. In an embodiment of the disclosure, the cache memory 320 may be configured as one or more cache memories. Data processed by the at least one processor 330 by executing the instructions or program code of the data processing module 316 may be the cache data 321 obtained by being read from the cache memory 320. An application that is executed by the at least one processor 330 executing the instructions or program code of the data processing module 316 may be an application that is executed using the cache data 321 obtained by being read from the cache memory 320.

In an embodiment of the disclosure, the cache memory 320 may be non-volatile memory. The cache memory 320 may include at least one of a flash memory-type memory, a hard disk-type memory, a multimedia card micro-type memory, a card-type memory (e.g., an SD or XD memory, etc.), an HDD, or an SSD. In an embodiment of the disclosure, the cache memory 320 may be memory included in the storage device (140 of FIG. 1).

In an embodiment of the disclosure, the cache memory 320 may be a memory for storing the cache data 321 for a certain period of time. The cache memory 320 may temporarily store the cache data 321. The cache memory 320 may be a memory for storing some pieces of network data provided from the server 150 as the cache data 321 according to a request from the at least one processor 330. In an embodiment of the disclosure, the cache memory 320 may be a memory for storing network data as the cache data 321 in order to quickly transmit some pieces of data stored in the storage device or memory 310 to the at least one processor 330. In an embodiment of the disclosure, the cache memory 320 is designed with a structure having an upper layer than the storage device or memory 310 to provide the cache data 321 to the at least one processor 330.

In an embodiment of the disclosure, the cache data 321 is data stored in the cache memory 320, and may be data that has been previously requested by the at least one processor 330 and provided to the at least one processor 330, data frequently requested by the at least one processor 330, or data stored in the cache memory 320 based on cache control information included in a header of network data obtained from the server 150. In an embodiment of the disclosure, the cache data 321 may be at least some pieces of the network data already provided by the server 150 according to a request from the at least one processor 330. The cache data 321 may be data that has been previously obtained from the server 150 and stored in the cache memory 320 according to a request from the at least one processor 330.

In an embodiment of the disclosure, the at least one processor 330 may consist of, but is not limited to, at least one of a CPU, a microprocessor, a GPU, an AP, application specific integrated circuits (ASICs), digital signal processors (DSPs), digital signal processing devices (DSPDs), programmable logic devices (PLDs), field programmable gate arrays (FPGAs), an NPU, or a dedicated artificial intelligence (AI) processor designed with a hardware structure specialized for training and processing AI models.

In an embodiment of the disclosure, the communication interface 340 may perform data communication with the server 150 according to control by the at least one processor 330. In an embodiment of the disclosure, the server 150 may be a server located outside of the electronic device 300. Furthermore, the communication interface 340 can perform data communication not only with the server 150 but also with other nearby electronic devices. For example, the communication interface 340 may perform data communication with the server 150 or other nearby electronic devices by using at least one of data communication methods including wired local area network (LAN), wireless LAN, Wi-Fi, Bluetooth, ZigBee, Wi-Fi Direct (WFD), Infrared Data Association (IrDA), Bluetooth Low Energy (BLE), near field communication (NFC), wireless broadband Internet (WiBro), World Interoperability for Microwave Access (WiMAX), Shared Wireless Access Protocol (SWAP), Wireless Gigabit Alliance (WiGig), and radio frequency (RF) communication.

In an embodiment of the disclosure, the at least one processor 330 may provide a signal to the server 150 via the communication interface 340, the signal requesting network data for executing an application. The at least one processor 330 may obtain the network data from the server 150 via the communication interface 340.

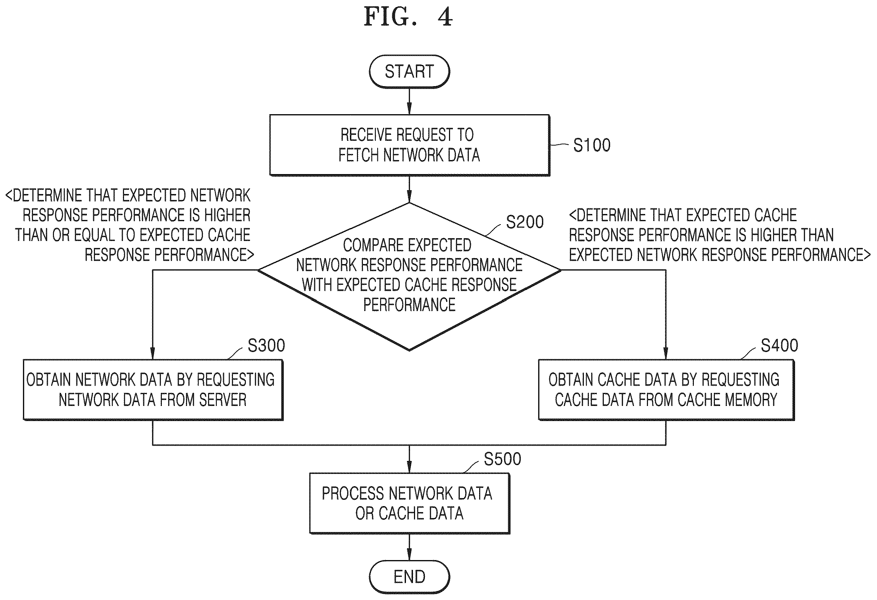

FIG. 4 is a flowchart illustrating operations of an electronic device, according to an embodiment of the disclosure.

Referring to FIGS. 1, 3, and 4, in an embodiment of the disclosure, an operating method of the electronic device 100may include receiving a request to fetch network data provided by the server 150 (S100). In an embodiment of the disclosure, in operation S100 of receiving a request to fetch network data, the at least one processor 330 may execute the instructions or program code of the request reception module 311 to receive the request to fetch the network data provided by the server 150 when executing an application.

In an embodiment of the disclosure, the operating method of the electronic device 100 may include comparing expected network response performance related to an operation of fetching the network data from the server 150 with expected cache response performance related to an operation of retrieving the cache data 321 corresponding to the network data from the cache memory 320 for storing the cache data 321 (S200). In an embodiment of the disclosure, in operation S200 of comparing expected network response performance with expected cache response performance, the at least one processor 330 may execute the instructions or program code of the response performance calculation module 313 to calculate the expected network response performance with the expected cache response performance. In operation S200 of comparing the expected network response performance with the expected cache response performance S200, the at least one processor 330 may execute the instructions or program code of the response performance comparison module 314 to compare the expected network response performance with the expected cache response performance. Operation S200 of comparing the expected network response performance with the expected cache response performance is described in detail below with reference to FIG. 5.

In an embodiment of the disclosure, the operating method of the electronic device 100 may include, based on a comparison result in operation S200 of comparing the expected network response performance with the expected cache response performance, obtaining the network data by requesting the network data from the server 150 via the communication interface 340, or obtaining the cache data 321 by requesting the cache data 321 from the cache memory 320.

In an embodiment of the disclosure, when it is determined that the expected network response performance is higher than or equal to the expected cache response performance in operation S200 of comparing the expected network response performance with the expected cache response performance, the operating method of the electronic device 100 may include obtaining the network data from the server 150 by requesting the network data from the server 150 via the communication interface 340 (S300). In operation S300 of obtaining the network data by requesting the network data from the server 150, the at least one processor 330 may execute the instructions or program code of the data obtaining module 315 to obtain the network data from the server 150 by requesting the network data from the server 150 via the communication interface 340.

In an embodiment of the disclosure, when it is determined that the expected cache response performance is higher than the expected network response performance in operation S200 of comparing the expected network response performance with the expected cache response performance, the operating method of the electronic device 100 may include obtaining the cache data 321 by requesting the cache data 321 from the cache memory 320 (S400). In operation S400 of obtaining the cache data 321 by requesting the cache data 321 from the cache memory 320, the at least one processor 330 may execute the instructions or program code of the data obtaining module 315 to obtain the cache data 321 by requesting the cache data 321 from the cache memory 320.

In an embodiment of the disclosure, the operating method of the electronic device 100 may include processing the obtained network data or the obtained cache data 321 (S500).

In an embodiment of the disclosure, when the network data is obtained from the server 150 because it is determined that the expected network response performance is higher than or equal to the expected cache response performance, the obtained network data may be processed in operation S500 of processing the obtained network data or the obtained cache data 321. In operation S500 of processing the obtained network data or the obtained cache data 321, the at least one processor 330 may execute the instructions or program code of the data processing module 316 to process the obtained network data.

In an embodiment of the disclosure, when the cache data 321 is obtained from the cache memory 320 because it is determined that the expected cache response performance is higher than the expected network response performance, the obtained cache data 321 may be processed in operation S500 of processing the obtained network data or the obtained cache data 321. In operation S500 of processing the obtained network data or the obtained cache data 321, the at least one processor 330 may execute the instructions or program code of the data processing module 316 to process the obtained cache data 321.

In an embodiment of the disclosure, processing obtained network data or obtained cache data may mean preprocessing the obtained network data or obtained cache data in order to execute an application. In operation S500 of processing the obtained network data or the obtained cache data 321, preprocessing operations such as transformation, feature extraction, sampling, filtering, sorting, cleaning, etc. may be performed on the obtained network data or obtained cache data 321.

FIG. 5 is a flowchart illustrating an operation of comparing expected network response performance with expected cache response performance, according to an embodiment of the disclosure. Hereinafter, the same reference numerals will be assigned to the same operations as those described with reference to FIG. 4, and descriptions already provided above are omitted.

Referring to FIGS. 1, 3, 4, and 5, in an embodiment of the disclosure, operation S200 of comparing the expected network response performance with the expected cache response performance may include operation S210 of determining the expected network response performance based on a first elapsed time from a time when network data is requested from the server 150 to a time when the network data is obtained from the server 150. In an embodiment of the disclosure, operation S200 of comparing the expected network response performance with the expected cache response performance may be performed after operation S100 of receiving the request to fetch network data provided by the server 150.

In an embodiment of the disclosure, in operation S210 of determining the expected network response performance based on the first elapsed time, the at least one processor 330 may execute the instructions or program code of the response performance calculation module 313 to calculate the first elapsed time from the time when network data is requested from the server 150 to the time when the network data is obtained from the server 150, and calculate the expected network response performance based on the calculated first elapsed time.

In an embodiment of the disclosure, a header of the cache data 321 stored in the cache memory 320 may include information about the time when the network data was requested from the server 150 and the time when the server 150 provided the network data in response to the request. In an embodiment of the disclosure, the at least one processor 330 may execute the instructions or program code of the response performance calculation module 313 to determine the first elapsed time based on at least one of an average of a plurality of accumulated past first elapsed times from the time when the network data is requested from the server 150 to the time when the network data is obtained from the server 150, or an immediately preceding first elapsed time from the time when the network data is requested from the server 150 to the time when the network data is obtained from the server 150.

However, the disclosure is not limited thereto, in operation S210 of determining the expected network response performance based on the first elapsed time, the expected network response performance may be calculated based on the first elapsed time calculated by using another method capable of calculating the first elapsed time.

In an embodiment of the disclosure, operation S200 of comparing the expected network response performance with the expected cache response performance may include operation S220 of determining the expected cache response performance based on a second elapsed time from a time when the cache data 321 is requested from the cache memory 320 to a time when the cache data 321 is obtained from the cache memory 320.

In an embodiment of the disclosure, in operation S220 of determining the expected cache response performance based on the second elapsed time, the at least one processor 330 may execute the instructions or program code of the response performance calculation module 313 to calculate the second elapsed time from the time when the cache data 321 is requested from the cache memory 320 to the time when the cache data 321 is obtained from the cache memory 320, and calculate the expected cache response performance based on the calculated second elapsed time.

In an embodiment of the disclosure, the header of the cache data 321 stored in the cache memory 320 may include information about the time when the cache data 321 was requested from the cache memory 320 and the time when the cache memory 320 provided the cache data 321 in response to the request.

In an embodiment of the disclosure, the at least one processor 330 may identify a total number of data requests accumulated in a queue of the cache memory 320. In this case, the total number of data requests may be the sum of not only a cache data request for the cache data 321 (e.g., a cache data request for executing the third application 113) but also at least one cache data request for respectively executing at least one application running on the electronic device 100, e.g., the first application 111 and the second application 112. In addition, the total number of data requests may refer to the total number of data requests accumulated in the queue of the storage device 140 as well as in the queue of the cache memory 320.

In an embodiment of the disclosure, the at least one processor 330 may identify a priority of the cache data request for the cache data 321 among all the data requests accumulated in the queue of the cache memory 320. In this case, the cache memory 320 may first respond to a data request that is assigned a higher priority among all the data requests queued in the cache memory 320 to provide corresponding data.

In an embodiment of the disclosure, the speed at which the cache memory 320 sequentially responds to each of the data requests accumulated in the queue and provides data corresponding to the data request may be pre-calculated based on the performance of the cache memory 320 and the at least one processor 330.

In an embodiment of the disclosure, the at least one processor 330 may execute the instructions or program code of the response performance calculation module 313 to determine the second elapsed time, based on at least one of an average of a plurality of accumulated past second elapsed times from the time when the cache data 321 is requested from the cache memory 320 to the time when the cache data 321 is obtained from the cache memory 320, an immediately preceding second elapsed time from the time when the cache data 321 is requested from the cache memory 320 to the time when the cache data 321 is obtained from the cache memory 320, a total number of data requests accumulated in the queue of the cache memory 320, or a priority of a cache data request for the cache data 321 among the data requests accumulated in the queue of the cache memory 320.

However, the disclosure is not limited thereto, in operation S220 of determining the expected cache response performance based on the second elapsed time, the expected cache response performance may be calculated based on the second elapsed time calculated by using another method capable of calculating the second elapsed time.

In an embodiment of the disclosure, operation S200 of comparing the expected network response performance with the expected cache response performance may include comparing, based on the first elapsed time and the second elapsed time, the expected network response performance with the expected cache response performance.

In an embodiment of the disclosure, the at least one processor 330 may execute the instructions or program code of the response performance comparison module 314 to determine that the expected network response performance is better than the expected cache response performance based on determining that the first elapsed time is less than the second elapsed time. The at least one processor 330 may execute the instructions or program code of the response performance comparison module 314 to determine that the expected network response performance is better than the expected cache response performance even when determining that the first elapsed time is equal to the second elapsed time. That is, the at least one processor 330 may execute the instructions or program code of the response performance comparison module 314 to determine that the expected network response performance is better than the expected cache response performance based on determining that the first elapsed time is less than or equal to the second elapsed time.

In an embodiment of the disclosure, based on determining, in operation S200 of comparing the expected network response performance with the expected cache response performance, that the first elapsed time is less than or equal to the second elapsed time and thus the expected network response performance is higher than the expected cache response performance, the electronic device 100 may perform operation S300 of obtaining the network data by requesting the network data from the server 150.

In an embodiment of the disclosure, the at least one processor 330 may execute the instructions or program code of the response performance comparison module 314 to determine that the expected cache response performance is better than the expected network response performance based on determining that the second elapsed time is less than the first elapsed time. That is, the at least one processor 330 may execute the instructions or program code of the response performance comparison module 314 to determine that the expected cache response performance is better than the expected network response performance based on determining that the first elapsed time exceeds the second elapsed time.

In an embodiment of the disclosure, based on determining, in operation S200 of comparing the expected network response performance with the expected cache response performance, that the first elapsed exceeds the second elapsed time and thus the expected cache response performance is higher than the expected network response performance, the electronic device 100 may perform operation S400 of obtaining the cache data 321 by requesting the cache data 321 from the cache memory 320.

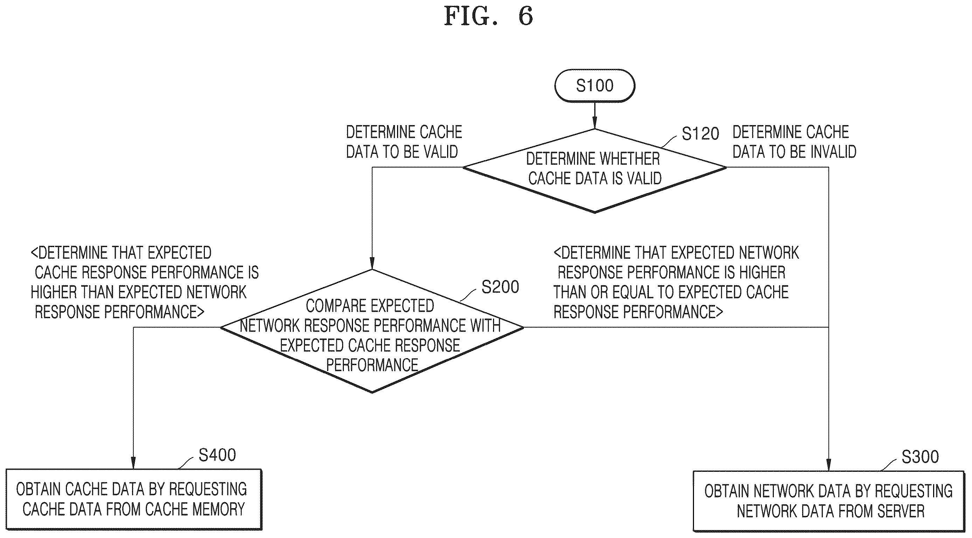

FIG. 6 is a flowchart illustrating an operation of determining whether cache data is valid, according to an embodiment of the disclosure. Hereinafter, the same reference numerals will be assigned to the same operations as those described with reference to FIG. 4, and descriptions already provided above are omitted.

Referring to FIGS. 1, 3, 4, and 6, in an embodiment of the disclosure, the operating method of the electronic device 100 may include operation S120 of determining whether the cache data 321 stored in the cache memory 320 is valid. In an embodiment of the disclosure, operation S120 of determining whether the cache data 321 stored in the cache memory 320 is valid may be performed after operation S100 of receiving the request to fetch network data provided by the server 150.

In an embodiment of the disclosure, in operation S120 of determining whether the cache data 321 stored in the cache memory 320 is valid, the at least one processor 330 may execute the instructions or program code of the cache control module 312 to determine whether the cache data 321 stored in the cache memory 320 is valid. In an embodiment of the disclosure, the at least one processor 330 may execute the instructions or program code of the cache control module 312 to determine whether the cache data 321 stored in the cache memory 320 is valid based on whether the cache data 321 corresponding to the network data requested in operation S100 of receiving the request to fetch the network data provided by the server 150 is stored in the cache memory 320, whether a validity period included in a header of the cache data 321 stored in the cache memory 320 has expired, etc. In an embodiment of the disclosure, even when the cache data 321 corresponding to the network data is not stored in the cache memory 320, this may indicate that the cache data 321 is invalid.

In an embodiment of the disclosure, based on determining that the cache data 321 stored in the cache memory 320 is valid in operation S120 of determining whether the cache data 321 is valid, the electronic device 100 may perform operation S200 of comparing the expected network response performance with the expected cache response performance. Based on a comparison result in operation S200 of comparing the expected network response performance with the expected cache response performance, the electronic device 100 may perform operation S300 of obtaining the network data by requesting the network data from the server 150 or operation S400 of obtaining the cache data 321 by requesting the cache data 321 from the cache memory 320.

In an embodiment of the disclosure, based on determining that the cache data 321 is invalid in operation S120 of determining whether the cache data 321 stored in the cache memory 320 is valid, the electronic device 100 may perform operation S300 of obtaining the network data by requesting the network data from the server 150. Because the cache data 321 stored in the cache memory 320 is invalid, regardless of whether the expected network response performance is higher than the expected cache response performance, the at least one processor 330 may obtain the network data by requesting the network data necessary for executing an application from the server 150 via the communication interface 340.

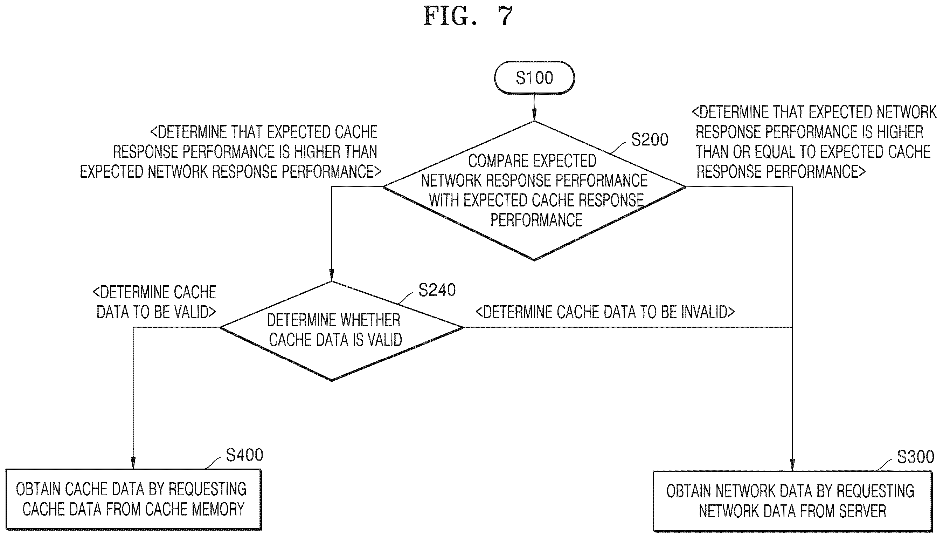

FIG. 7 is a flowchart illustrating an operation of determining whether cache data is valid after comparing expected network response performance with expected cache response performance, according to an embodiment of the disclosure. Hereinafter, the same reference numerals will be assigned to the same operations as those described with reference to FIGS. 4 to 6, and descriptions already provided above are omitted.

Referring to FIGS. 1, 3, 4, 6, and 7, in an embodiment of the disclosure, the operating method of the electronic device 100 may include operation S240 of determining whether the cache data 321 stored in the cache memory 320 is valid. In an embodiment of the disclosure, operation S120 of determining whether the cache data 321 stored in the cache memory 320 is valid may be performed after operation S200 of comparing the expected network response performance with the expected cache response performance. In an embodiment of the disclosure, operation S240 of determining whether the cache data 321 stored in the cache memory 320 is valid may be performed in response to a determination that the expected cache response performance is higher than the expected network response performance in operation S200 of comparing the expected network response performance with the expected cache response performance.

In an embodiment of the disclosure, based on determining that the expected cache response performance is higher than the expected network response performance in operation S200 of comparing the expected network response performance with the expected cache response performance, and determining that the cache data 321 stored in the cache memory 320 is valid in operation S240 of determining whether the cache data 321 is valid, the electronic device 100 may perform operation S400 of obtaining the cache data 321 by requesting the cache data 321 from the cache memory 320.

In an embodiment of the disclosure, when the expected cache response performance is determined to be higher than the expected network response performance in operation S200 of comparing the expected network response performance with the expected cache response performance, but the cache data 321 stored in the cache memory 320 is determined to be invalid in operation S240 of determining whether the cache data 321 is valid, the electronic device 100 may perform operation S300 of obtaining the network data by requesting the network data from the server 150. Because the cache data 321 stored in the cache memory 320 is invalid even though the expected cache response performance is higher than the expected network response performance, the at least one processor 330 may obtain the network data by requesting the network data necessary for executing an application from the server 150 via the communication interface 340.

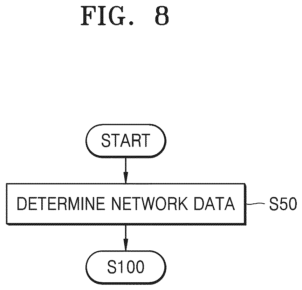

FIG. 8 is a flowchart illustrating an operation of determining whether a request to fetch network data is needed, according to an embodiment of the disclosure. Hereinafter, the same reference numerals will be assigned to the same operations as those described with reference to FIG. 4, and descriptions already provided above are omitted.

Referring to FIGS. 1, 3, 4, and 8, in an embodiment of the disclosure, the operating method of the electronic device 100 may include determining, from among at least one piece of data to execute an application, network data that needs to be obtained by requesting the server 150 (S50). In an embodiment of the disclosure, operation S50 of determining network data may be performed before operation S100 of receiving a request to retrieve the network data provided by the server 150.

In an embodiment of the disclosure, the network data may mean data that is stored in the server 150 and needs to be provided by the server 150 by requesting the server 150 when executing the application. However, when network data has already been obtained by requesting the server 150, the corresponding network data may be stored in the cache memory 320 as the cache data 321.

In an embodiment of the disclosure, the at least one processor 330 may execute the instructions or program code of the request reception module 311 to determine, from among at least one piece of data for instructions, data structures, or program code to execute an application, network data that is stored in the server 150 and needs to be provided from the server 150 by requesting the server 150.

In an embodiment of the disclosure, for data determined to be the network data among the at least one piece of data for executing the application, the at least one processor 330 may generate a request to fetch the network data provided by the server 150. Furthermore, the at least one processor 330 may receive, from the application, a request to fetch network data that is provided by the server 150 when executing the application. The at least one processor 330 may request the storage device 140 for data that is not determined to be network data among the at least one piece of data for executing the application.

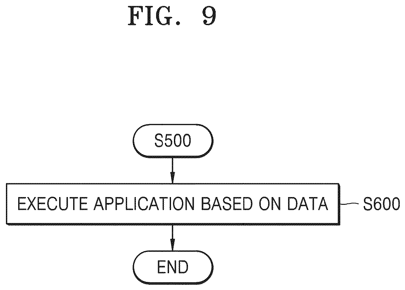

FIG. 9 is a flowchart illustrating an operation of executing an application based on obtained network data or cache data, according to an embodiment of the disclosure. In an embodiment of the disclosure, the same reference numerals will be assigned to the same operations as those described with reference to FIG. 4, and descriptions already provided above are omitted.

Referring to FIGS. 1, 3, 4 and 9, in an embodiment of the disclosure, the operating method of the electronic device 100 may include executing an application by using the obtained network data or the obtained cache data (S600). In an embodiment of the disclosure, operation S600 of executing the application by using the obtained network data or the obtained cache data may be performed after operation S500 of processing the obtained network data or the obtained cache data.

In an embodiment of the disclosure, in operation S600 of executing the application by using the obtained network data or the obtained cache data, the used network data or cache data may be network data or cache data that has been preprocessed in operation S500 of processing the obtained network data or the obtained cache data.

In an embodiment of the disclosure, the at least one processor 330 may execute the instructions or program code of the data processing module 316 to execute the application by using the obtained network data or the obtained cache data.

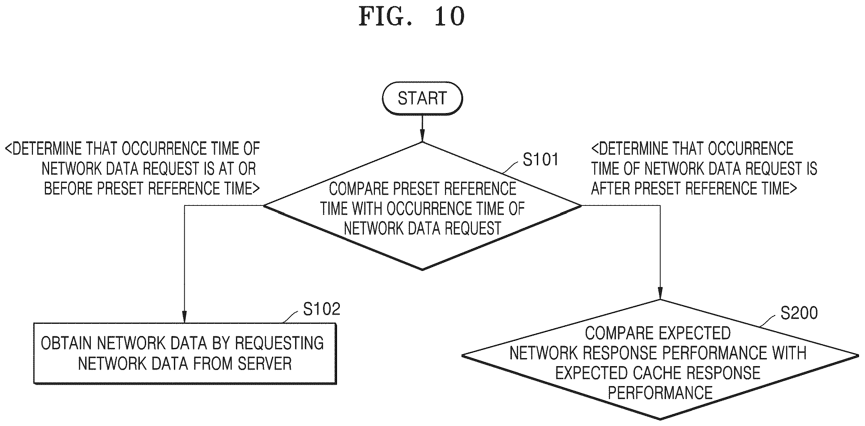

FIG. 10 is a flowchart illustrating operations of an electronic device based on a relationship between an occurrence time of a network data request and a preset reference time, according to an embodiment of the disclosure. In an embodiment of the disclosure, the same reference numerals will be assigned to the same operations as those described with reference to FIG. 4, and descriptions already provided above are omitted.

Referring to FIGS. 1, 3, 4 and 10, in an embodiment of the disclosure, the operating method of the electronic device 100 may include comparing a preset reference time with an occurrence time of a request to fetch network data provided by the server 150 (S101). In an embodiment of the disclosure, operation S101 of comparing the preset reference time with the occurrence time of the request to fetch the network data provided by the server 150 may be performed after operation S100 of receiving the request to fetch the network data provided by the server 150.

In an embodiment of the disclosure, the preset reference time may be a time set based on a particular event. In an embodiment of the disclosure, the preset reference time may be set to 3 seconds from a time point when the particular event occurs. However, the disclosure is not limited thereto, and the preset reference time may be set to a time shorter or longer than 3 seconds.

In an embodiment of the disclosure, the particular event may include an operation of booting the electronic device 100. In this case, the preset reference time may be a time set to 3 seconds from a time point when the electronic device 100 is booted. However, the disclosure is not limited thereto, and the particular event may include execution of a particular application or execution of a particular operation within a particular application. In an embodiment of the disclosure, the particular event may refer to the start of a video recording operation in a camera application. In this case, the preset reference time may be a time set to 3 seconds from the start of the video recording operation in the camera application.

In an embodiment of the disclosure, the preset reference time may be an interval during which it is determined that a large number of data requests may be accumulated in the queue of the storage device 140 or the queue of the cache memory 320 when a particular event occurs, and thus, data corresponding to a data response may be provided late due to an input/output bottleneck, thereby slowing down execution or operation of the particular event.

In an embodiment of the disclosure, in operation S101 of comparing the preset reference time with the occurrence time of the request to fetch the network data provided by the server 150, the at least one processor 330 may compare the preset reference time with the time when the request for the network data occurred which is received in operation S100 of receiving the request for the network data. By comparing the time when the received request for the network data occurred with the preset reference time, the at least one processor 330 may determine whether the time when the request for the network data occurred is at or before the preset reference time. By comparing the time when the received request for the network data occurred with the preset reference time, the at least one processor 330 may determine whether the time when the request for the network data occurred is after the preset reference time.

In an embodiment of the disclosure, based on determining that the occurrence time of the received request for the network data is at or before the present reference time from operation S101 of comparing the preset reference time with the occurrence time of the request to fetch the network data provided by the server 150, the electronic device 100 may perform operation S102 of obtaining the network data by requesting the network data from the server 150.

In an embodiment of the disclosure, based on determining that the occurrence time of the received request for the network data is after the present reference time from operation S101 of comparing the preset reference time with the occurrence time of the request to fetch the network data provided by the server 150, the electronic device 100 may perform operation S200 of comparing the expected network response performance with the expected cache response performance.

In this way, when a large number of data requests are expected to be accumulated in the queue of the storage device 140 or the queue of the cache memory 320, network data may be obtained by requesting the network data from the server 150 rather than from the cache memory 320, thereby preventing the execution or operation speed of a corresponding event from slowing down due to late provision of data corresponding to a data response due to an input/output bottleneck .

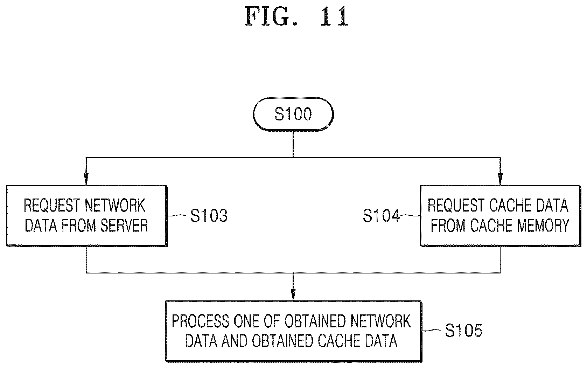

FIG. 11 is a flowchart illustrating an operation in which an electronic device requests network data from a server and cache data from a cache memory, according to an embodiment of the disclosure. In an embodiment of the disclosure, the same reference numerals will be assigned to the same operations as those described with reference to FIG. 4, and descriptions already provided above are omitted.

Referring to FIGS. 1, 3, 4, and 11, in an embodiment of the disclosure, the operating method of the electronic device 100 may include requesting the network data from the server 150 (S103). The operating method of the electronic device 100 may include operation S104 of requesting the cache data 321 from the cache memory 320 (S104).

In an embodiment of the disclosure, operation S103 of requesting the network data from the server 150 and operation S104 of requesting the cache data 321 from the cache memory 320 may each be performed after operation S100 of receiving the request to fetch the network data provided by the server 150.

In an embodiment of the disclosure, when receiving the request for the network data in operation S100 of receiving the request for the network data, the at least one processor 330 may request the network data from the server 150 and the cache data 321 from the cache memory 320.

In an embodiment of the disclosure, the operating method of the electronic device 100 may include processing one of the obtained network data and the obtained cache data 321 (S105). In an embodiment of the disclosure, in operation S105 of processing one of the obtained network data and the obtained cache data 321, the at least one processor 330 may process one of the obtained network data and the obtained cache data 321 when the network data is obtained from the server 150 from which the network data is requested, or when the cache data 321 is obtained from the cache memory 320 from which the cache data 321 is requested.

In an embodiment of the disclosure, the at least one processor 330 may process data obtained first among the network data obtained from the server 150 and the cache data 321 obtained from the cache memory 320. The at least one processor 330 may execute an application by using data obtained first among the network data obtained from the server 150 and the cache data 321 obtained from the cache memory 320. In this way, the at least one processor 330 may execute the application by using data obtained first among the network data and the cache data 321, regardless of whether the cache data 321 included in the cache memory 320 is valid and regardless of comparison between the expected network response performance and the expected cache response performance, thereby preventing the execution or operation speed of the application from slowing down.

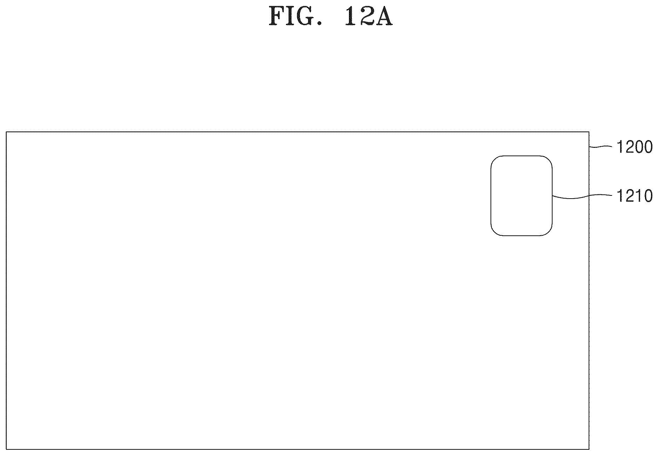

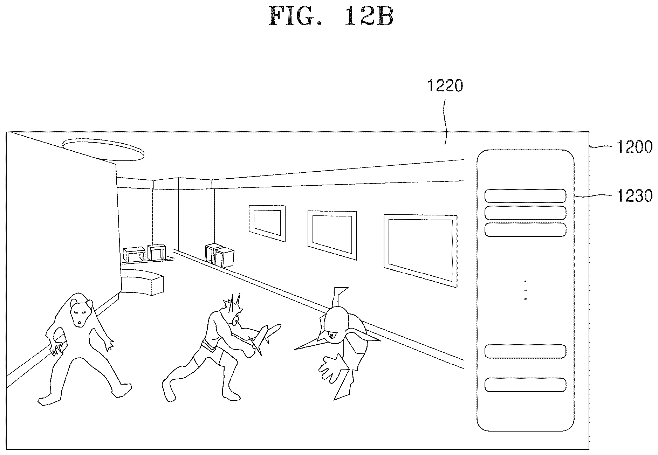

FIG. 12A is a diagram illustrating an electronic device executing an application, according to an embodiment of the disclosure. FIG. 12B is a diagram illustrating an electronic device executing an application in which a plurality of operations are performed, according to an embodiment of the disclosure.

Referring to FIGS. 1, 3, 4, and 12A, an electronic device 1200 is shown in FIG. 12A. In an embodiment of the disclosure, FIG. 12A shows the electronic device 1200 as having the shape of a television (TV), but the disclosure is not limited thereto.

In an embodiment of the disclosure, FIG. 12A illustrates an example in which an application 1210 is executed on the electronic device 1200 after booting the electronic device 1200. In an embodiment of the disclosure, after booting the TV, a web application for receiving a streaming service via a web server may be executed on the TV.

In an embodiment of the disclosure, network data (e.g., video, etc.) provided from the server 150 may be to execute the application 1210. The electronic device 1200 may determine whether the cache data 321 stored in the cache memory 320 is valid.

In an embodiment of the disclosure, the electronic device 1200 may determine that the cache data 321 is valid when it is determined that a validity period of the cache data 321 corresponding to the network data has not expired.

In an embodiment of the disclosure, when the cache data 321 is valid, the electronic device 1200 may calculate a first elapsed time from the time when the network data is requested from the server 150 to the time when the network data is obtained from the server 150 and a second elapsed time from the time when the cache data 321 is requested from the cache memory 320 to the time when the cache data 321 is obtained from the cache memory 320, and compare the first elapsed time with the second elapsed time.

In an embodiment of the disclosure, even when the cache data 321 is stored in the cache memory 320, many data responses may be accumulated in the queue of the cache memory 320 or the queue of the storage device 140 including the cache memory 320 as a plurality of functions and other types of applications are executed upon booting the electronic device 1200. Accordingly, cache data to execute the application 1210 may be provided late. Furthermore, due to technological advancements in the communication interface 340 and networks, the speed at which network data is provided via the server 150 may be faster than before.

Thus, the electronic device 1200 may compare the first elapsed time with the second elapsed time, and when the first elapsed time is less than the second elapsed time, determine that expected network response performance is higher than expected cache response performance. The electronic device 1200 may request the network data from the server 150 via the communication interface 340, and receive the network data from the server 150 to execute the application 1210.

In an embodiment of the disclosure, the electronic device 1200 may compare the first elapsed time with the second elapsed time, and when the first elapsed time is equal to the second elapsed time, determine that the expected network response performance is equal to the expected cache response performance. In order to speed up the execution of a plurality of functions and other types of applications when booting the electronic device 1200 without cache data requests to execute the application 1210 being accumulated in the queue of the cache memory 320 or the queue of the storage device 140, the electronic device 1200 may request the network data from the server 150 (e.g., a web server) via the communication interface 340 and receive the network data from the server 150 to execute the application 1210.

In an embodiment of the disclosure, the electronic device 1200 may compare the first elapsed time with the second elapsed time, and when the first elapsed time is greater than the second elapsed time, determine that the expected network response performance is lower than the expected cache response performance. To prevent the application 1210 from being executed late, the electronic device 1200 may request the cache data 321 from the cache memory 320 and receive the cache data 321 from the cache memory 320 to execute the application 1210.

In an embodiment of the disclosure, the electronic device 1200 may determine that the cache data 321 is invalid when it is determined that the cache data 321 corresponding to the network data is not stored or that the validity period of the corresponding cache data 321 has expired.

In an embodiment of the disclosure, when the cache data 321 is invalid, the electronic device 1200 may request network data for executing the application 1210 from the server 150 linked with the application 1210 via the communication interface 340 and obtain the network data from the server 150. The electronic device 1200 may process the obtained network data and execute the application 1210.

Referring to FIGS. 1, 3, 4 and 12B, in an embodiment of the disclosure, FIG. 12B illustrates an example in which while a first operation 1220 of one application (1210 of FIG. 12A) is being executed on the electronic device 1200, a second operation 1230 that is another operation is further being executed. In an embodiment of the disclosure, when the electronic device 1200 is a TV, executing the second operation 1230 while executing the first operation 1220 may mean a case where, while a user is watching a video via a web application on the TV, the TV is displaying a menu for the user to watch another video, providing recommended videos, displaying an advertisement, or displaying a notification (i.e., the second operation 1230), but is not limited thereto.

In an embodiment of the disclosure, network data provided from the server 150 may be to execute the second operation 1230. The electronic device 1200 may determine whether the cache data 321 stored in the cache memory 320 is valid.

In an embodiment of the disclosure, the electronic device 1200 may determine that the cache data 321 is valid when it is determined that a validity period of the cache data 321 corresponding to the network data has not expired.

In an embodiment of the disclosure, when the cache data 321 is valid, the electronic device 1200 may calculate the first elapsed time and the second elapsed time, and compare the first elapsed time with the second elapsed time.

In an embodiment of the disclosure, even when the cache data 321 is stored in the cache memory 320, as the first operation 1220 of the application is being executed, many data responses may be accumulated in the queue of the cache memory 320 or the queue of the storage device 140 including the cache memory 320. Accordingly, the cache data to perform the second operation 1230 of the application may be provided late.

Thus, the electronic device 1200 may compare the first elapsed time with the second elapsed time, and when the first elapsed time is less than the second elapsed time, determine that expected network response performance is higher than expected cache response performance. The electronic device 1200 may request network data from the server 150 via the communication interface 340, and receive the network data from the server 150 to execute the second operation 1230 of the application.

In an embodiment of the disclosure, the electronic device 1200 may compare the first elapsed time with the second elapsed time, and when the first elapsed time is equal to the second elapsed time, determine that the expected network response performance is equal to the expected cache response performance. In order to speed up the execution of the first operation 1220 of the application without cache data requests to execute the second operation 1230 of the application being accumulated in the queue of the cache memory 320 or the queue of the storage device 140, the electronic device 1200 may request the network data from the server 150 via the communication interface 340 and receive the network data from the server 150 to execute the second operation 1230 of the application.

In an embodiment of the disclosure, the electronic device 1200 may compare the first elapsed time with the second elapsed time, and when the first elapsed time is greater than the second elapsed time, determine that the expected network response performance is lower than the expected cache response performance. To prevent the second operation 1230 from being executed late, the electronic device 1200 may request the cache data 321 from the cache memory 320 and receive the cache data 321 from the cache memory 320 to execute the second operation 1230 of the application.

In an embodiment of the disclosure, the electronic device 1200 may determine that the cache data 321 is invalid when it is determined that the cache data 321 corresponding to the network data is not stored or that the validity period of the corresponding cache data 321 has expired.

In an embodiment of the disclosure, when the cache data 321 is invalid, the electronic device 1200 may request network data for executing the application 1210 from the server 150 linked with the application 1210 via the communication interface 340 and obtain the network data from the server 150. The electronic device 1200 may process the obtained network data and execute the second operation 1230 of the application 1210.

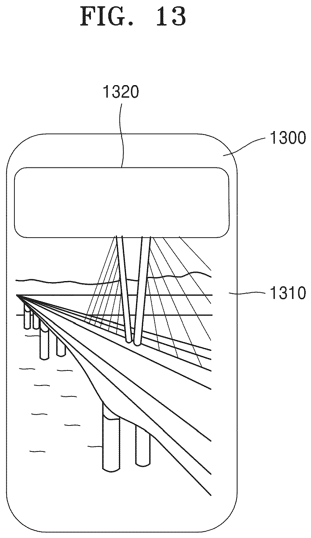

FIG. 13 is a diagram illustrating an electronic device executing a plurality of applications, according to an embodiment of the disclosure.

Referring to FIGS. 1, 3, 4, and 13, FIG. 13 shows an electronic device 1300 as having the shape of a smartphone, but the disclosure is not limited thereto.

In an embodiment of the disclosure, FIG. 13 illustrates an example in which while a first application 1310 is being executed in the electronic device 1300, a second application 1320 is being executed. In an embodiment of the disclosure, the example may be a case where while recording a video via a camera of the electronic device 1300, the user may be listening to music, using a messenger application, receiving an alarm, or being provided with an advertisement, but is not limited to any of these.

In an embodiment of the disclosure, network data provided from the server 150 may be to execute the second application 1320. The electronic device 1300 may determine whether the cache data 321 stored in the cache memory 320 is valid.

In an embodiment of the disclosure, the electronic device 1300 may determine that the cache data 321 is valid when it is determined that a validity period of the cache data 321 corresponding to the network data has not expired.

In an embodiment of the disclosure, when the cache data 321 is valid, the electronic device 1300 may calculate the first elapsed time and the second elapsed time, and compare the first elapsed time with the second elapsed time.

In an embodiment of the disclosure, even when the cache data 321 is stored in the cache memory 320, as the first application 1310 is being executed, many data responses may be accumulated in the queue of the cache memory 320 or the queue of the storage device 140 including the cache memory 320. Accordingly, cache data to execute the second application 1320 may be provided late.

Thus, the electronic device 1300 may compare the first elapsed time with the second elapsed time, and when the first elapsed time is less than the second elapsed time, determine that expected network response performance is higher than expected cache response performance. The electronic device 1300 may request the network data from the server 150 via the communication interface 340, and receive the network data from the server 150 to execute the second application 1320.

In an embodiment of the disclosure, the electronic device 1300 may compare the first elapsed time with the second elapsed time, and when the first elapsed time is equal to the second elapsed time, determine that the expected network response performance is equal to the expected cache response performance. In order to speed up the execution of the first application 1310 without cache data requests to execute the second application 1320 being accumulated in the queue of the cache memory 320 or the queue of the storage device 140, the electronic device 1200 may request the network data from the server 150 via the communication interface 340 and receive the network data from the server 150 to execute the second application 1320.

In an embodiment of the disclosure, the electronic device 1300 may compare the first elapsed time with the second elapsed time, and when the first elapsed time is greater than the second elapsed time, determine that the expected network response performance is lower than the expected cache response performance. To prevent the second application 1320 from being executed late, the electronic device 1300 may request the cache data 321 from the cache memory 320 and receive the cache data 321 from the cache memory 320 to execute the second application 1320.

In an embodiment of the disclosure, when the electronic device 1200 may determine that the cache data 321 is invalid when it is determined that the cache data 321 corresponding to the network data is not stored or that the validity period of the corresponding cache data 321 has expired.

In an embodiment of the disclosure, when the cache data 321 is invalid, the electronic device 1300 may request network data for executing the second application 1320 from the server 150 linked with the second application 1320 via the communication interface 340 and obtain the network data from the server 150. The electronic device 1300 may process the obtained network data and execute the second application 1320.

To solve the above-described technical problems, according to an embodiment of the disclosure, an electronic device is provided. The electronic device may include a memory storing at least one instruction. The electronic device may include a cache memory storing cache data. The electronic device may include at least one processor configured to execute the at least one instruction stored in the memory. The electronic device may include a communication interface. The at least one processor may be configured to execute the at least one instruction to receive a request to fetch network data provided by a server. The at least one processor may be configured to execute the at least one instruction to compare expected network response performance indicating the time expected for fetching the network data from the server with expected cache response performance indicating the time expected for retrieving cache data corresponding to the network data from the cache memory. The at least one processor may be configured to execute the at least one instruction to, based on a result of the comparing, obtain the network data by requesting the network data from the server via the communication interface, or obtain the cache data by requesting the cache data from the cache memory. The at least one processor may be configured to execute the at least one instruction to process the obtained network data or the obtained cache data.

In an embodiment of the disclosure, the at least one processor may be configured to execute the at least one instruction to determine the expected network response performance based on a first elapsed time from a time when the network data is requested from the server to a time when the network data is obtained from the server. The at least one processor may be configured to execute the at least one instruction to determine the expected cache response performance based on a second elapsed time from a time when the cache data is requested from the cache memory to a time when the cache data is obtained from the cache memory.

In an embodiment of the disclosure, the at least one processor may be configured to execute the at least one instruction to, based on the first elapsed time being less than or equal to the second elapsed time, obtain the network data from the server by requesting the network data from the server via the communication interface. The at least one processor may be configured to execute the at least one instruction to, based on the first elapsed being greater than the second elapsed time, obtain the cache data from the cache memory by requesting the cache data from the cache memory.

In an embodiment of the disclosure, the at least one processor may be configured to execute the at least one instruction to determine the first elapsed time based on at least one of an average of a plurality of accumulated past first elapsed times or an immediately preceding first elapsed time.

In an embodiment of the disclosure, the at least one processor may be configured to execute the at least one instruction to determine the second elapsed time, based on at least one of an average of a plurality of accumulated past second elapsed times, an immediately preceding second elapsed time, a total number of data requests accumulated in a queue of the cache memory, or a priority of a cache data request for the cache data among the data requests accumulated in the queue of the cache memory.

In an embodiment of the disclosure, the at least one processor may be configured to execute the at least one instruction to determine whether the cache data stored in the cache memory is valid. The at least one processor may be configured to execute the at least one instruction to, based on determining that the cache data is valid, compare the expected network response performance with the expected cache response performance. The at least one processor may be configured to execute the at least one instruction to, based on determining that the cache data is invalid, obtain the network data from the server by requesting the network data from the server via the communication interface.

In an embodiment of the disclosure, the at least one processor may be configured to execute the at least one instruction to determine whether the cache data is valid based on whether a validity period of the cache data has expired.

In an embodiment of the disclosure, the cache data may be data that has been previously obtained from the server and stored in the cache memory.

In an embodiment of the disclosure, the cache memory may include a non-volatile memory.

In an embodiment of the disclosure, the electronic device may execute an application. The network data and the cache data may be data for executing the application. The at least one processor may be configured to execute the at least one instruction to execute the application by using the obtained network data or the obtained cache data.

To solve the above-described technical problems, according to an embodiment of the disclosure, an operating method of an electronic device is provided. The operating method of the electronic device may include receiving a request to fetch network data provided by a server. The operating method of the electronic device may include comparing expected network response performance indicating the time expected for fetching the network data from the server with expected cache response performance indicating the time expected for retrieving cache data corresponding to the network data from a cache memory. The operating method of the electronic device may include, based on a result of the comparing, obtaining the network data from the server by requesting the network data from the server via the communication interface, or obtaining the cache data from the cache memory by requesting the cache data from the cache memory. The operating method of the electronic device may include processing the obtained network data or the obtained cache data.

In an embodiment of the disclosure, the comparing of the expected network response performance with the expected cache response performance may include determining the expected network response performance based on a first elapsed time from a time when the network data is requested from the server to a time when the network data is obtained from the server. The comparing of the expected network response performance with the expected cache response performance may include determining the expected cache response performance based on a second elapsed time from a time when the cache data is requested from the cache memory to a time when the cache data is obtained from the cache memory. The comparing of the expected network response performance with the expected cache response performance may include comparing the expected network response performance with the expected cache response performance.

In an embodiment of the disclosure, based on the first elapsed time being less than or equal to the second elapsed time in the comparing of the expected network response performance with the expected cache response performance, to the operating method may include obtaining the network data from the server by requesting the network data from the server via a communication interface. Based on the first elapsed being greater than the second elapsed time in the comparing of the expected network response performance with the expected cache response performance, the operating method may include obtaining the cache data from the cache memory by requesting the cache data from the cache memory.

In an embodiment of the disclosure, the determining of the expected network response performance may include determining the first elapsed time based on at least one of an average of a plurality of accumulated past first elapsed times, or an immediately preceding first elapsed time.

In an embodiment of the disclosure, the determining of the expected cache response performance may include determining the second elapsed time, based on at least one of an average of a plurality of accumulated past second elapsed times, an immediately preceding second elapsed time, a total number of data requests accumulated in a queue of the cache memory, or a priority of a cache data request for the cache data among the data requests accumulated in the queue of the cache memory.

In an embodiment of the disclosure, the operating method of the electronic device may further include determining whether the cache data stored in the cache memory is valid. Based on determining that the cache data is valid in the determining of whether the cache data is valid, the operating method may include comparing the expected network response performance with the expected cache response performance. Based on determining that the cache data is invalid in the determining of whether the cache data is valid, the operating method may include obtaining the network data from the server by requesting the network data from the server via the communication interface.

In an embodiment of the disclosure, the determining whether the cache data is valid may include determining whether the cache data is valid based on whether a validity period of the cache data has expired.

To solve the above-described technical problems, there may be provided a computer-readable recording medium having recorded thereon a program for performing, on a computer, at least one of the operating methods of the electronic device according to the embodiments of the disclosure.

A program executed by the electronic device described in the disclosure may be implemented as a hardware component, a software component, and/or a combination of the hardware component and the software component. A program may be executed by any system capable of executing computer-readable instructions.

Software may include a computer program, a piece of code, an instruction, or a combination of one or more thereof, and configure a processing device to operate as desired or instruct the processing device independently or collectively.

The software may be implemented as a computer program including instructions stored in computer-readable storage media. Examples of the computer-readable recording media include magnetic storage media (e.g., ROM, RAM, a floppy disk, a hard disk, etc.), optical recording media (e.g., compact disc (CD)-ROM, a digital versatile disc (DVD), etc.), etc. The computer-readable recording media may be distributed over computer systems connected through a network so that computer-readable code may be stored and executed in a distributed manner. The recording media may be read by a computer, stored in a memory, and executed by a processor.

A computer-readable storage medium may be provided in the form of a non-transitory storage medium. In this regard, the term 'non-transitory' only means that the storage medium does not include a signal and is a tangible device, and the term does not differentiate between where data is semi-permanently stored in the storage medium and where the data is temporarily stored in the storage medium. For example, the 'non-transitory storage medium' may include a buffer in which data is temporarily stored.

Furthermore, programs according to embodiments of the disclosure set forth herein may be included in a computer program product when provided. The computer program product may be traded, as a product, between a seller and a buyer.

The computer program product may include a software program and a computer-readable storage medium having stored thereon the software program. For example, the computer program product may include a product (e.g., a downloadable application) in the form of a software program electronically distributed by a manufacturer of the electronic device or through an electronic market (e.g., Samsung Galaxy Store^{™}). For such electronic distribution, at least a part of the software program may be stored in the storage medium or may be temporarily generated. In this case, the storage medium may be a storage medium of a server of a manufacturer of the electronic device, a server of the electronic market, or a relay server for temporarily storing the software program.

While the embodiments of the disclosure have been described above with reference to limited examples and figures, it will be understood by those of ordinary skill in the art that various modifications and changes in form and details may be made from the above descriptions. For example, adequate effects may be achieved even when the above techniques are performed in a different order than that described above, and/or the aforementioned components such as computer systems or modules are coupled or combined in different forms and modes than those described above or are replaced or supplemented by other components or their equivalents.

## Claims

1. An electronic device (100) comprising:
a memory (130) storing at least one instruction;
a cache memory (141) storing cache data;
at least one processor (110) configured to execute the at least one instruction stored in the memory (130); and
a communication interface (340),
wherein the at least one processor (110) is configured to execute the at least one instruction to:
receive a request to fetch network data provided by a server (150),
compare expected network response performance indicating a time expected for fetching the network data from the server (150) with expected cache response performance indicating a time expected for retrieving cache data corresponding to the network data from the cache memory (141),
based on a result of the comparing, obtain the network data by requesting the network data from the server (150) via the communication interface (340) or obtain the cache data by requesting the cache data from the cache memory (141), and
process the obtained network data or the obtained cache data.

2. The electronic device (100) of claim 1, wherein the at least one processor (110) is further configured to execute the at least one instruction to:
determine the expected network response performance based on a first elapsed time from a time when the network data is requested from the server (150) to a time when the network data is obtained from the server (150), and
determine the expected cache response performance based on a second elapsed time from a time when the cache data is requested from the cache memory (141) to a time when the cache data is obtained from the cache memory (141).

3. The electronic device (100) of claim 2, wherein the at least one processor (110) is further configured to execute the at least one instruction to:
based on the first elapsed time being less than or equal to the second elapsed time, obtain the network data from the server (150) by requesting the network data from the server (150) via the communication interface (340), and
based on the first elapsed being greater than the second elapsed time, obtain the cache data from the cache memory (141) by requesting the cache data from the cache memory (141).

4. The electronic device (100) of claim 2 or claim 3, wherein the at least one processor (110) is further configured to execute the at least one instruction to:
determine the first elapsed time based on at least one of: an average of a plurality of accumulated past first elapsed times, or an immediately preceding first elapsed time.

5. The electronic device (100) of any one of claims 2 to 4, wherein the at least one processor (110) is further configured to execute the at least one instruction to:
determine the second elapsed time, based on at least one of: an average of a plurality of accumulated past second elapsed times, an immediately preceding second elapsed time, a total number of data requests accumulated in a queue of the cache memory (141), or a priority of a cache data request for the cache data among the data requests accumulated in the queue of the cache memory (141).

6. The electronic device (100) of any one of claims 1 to 5, wherein the at least one processor (110) is further configured to execute the at least one instruction to
determine whether the cache data stored in the cache memory (141) is valid,
based on determining that the cache data is valid, compare the expected network response performance with the expected cache response performance,
based on determining that the cache data is invalid, obtain the network data from the server (150) by requesting the network data from the server (151) via the communication interface (340).

7. The electronic device (100) of claim 6, wherein the at least one processor (110) is further configured to execute the at least one instruction to determine whether the cache data is valid based on whether a validity period of the cache data has expired.
[Claim 1]

8. The electronic device (100) of any one of claims 1 to 7, wherein the cache data is data that has been previously obtained from the server (150) and stored in the cache memory (141).

9. The electronic device (100) of any one of claims 1 to 8, wherein the cache memory (141) comprises a non-volatile memory.

10. The electronic device (100) of any one of claims 1 to 9,
wherein the electronic device (100) is configured to execute an application,
the network data and the cache data are data for executing the application, and
the at least one processor (110) is further configured to execute the at least one instruction to execute the application by using the obtained network data or the obtained cache data.

11. An operating method of an electronic device(100), the operating method comprising:
receiving a request to fetch network data provided by a server (150) (S100);
comparing expected network response performance indicating a time expected for fetching the network data from the server (150) with expected cache response performance indicating a time expected for retrieving cache data corresponding to the network data from a cache memory (141) (S200);
based on a result of the comparing, obtaining the network data by requesting the network data from the server (150) via a communication interface (340) (S300), or obtaining the cache data by requesting the cache data from the cache memory (141) (S400); and
processing the obtained network data or the obtained cache data (S500).

12. The operating method of claim 11, wherein the comparing the expected network response performance with the expected cache response performance (S200) comprises:
determining the expected network response performance based on a first elapsed time from a time when the network data is requested from the server (150) to a time when the network data is obtained from the server (150) (S210);
determining the expected cache response performance based on a second elapsed time from a time when the cache data is requested from the cache memory (141) to a time when the cache data is obtained from the cache memory (141) (S220); and
comparing the expected network response performance with the expected cache response performance (S230).

13. The operating method of claim 12, further comprising:
based on the first elapsed time being less than or equal to the second elapsed time from the comparing of the expected network response performance with the expected cache response performance (S230), obtaining the network data from the server (150) by requesting the network data from the server (150) via the communication interface (340), and
based on the first elapsed being greater than the second elapsed time, obtaining the cache data from the cache memory (141) by requesting the cache data from the cache memory (141).

14. The operating method of claim 12 or claim 13, wherein the determining the expected network response performance (S210) comprises:
determining the first elapsed time based on at least one of: an average of a plurality of accumulated past first elapsed times, or an immediately preceding first elapsed time.

15. A computer-readable recording medium having recorded thereon a program for performing, on a computer, the operating method of any one of claims 11 to 14.
